# FASCICULE DE BREVET EUROPEEN

(11) **EP 2 481 968 B1**
(45) Date de publication et mention de la délivrance du brevet: **26.12.2018**
(21) Numéro de dépôt: 12153039.8
(22) Date de dépôt: 30.01.2012
(51) Int. Cl.: F17C 1/12, F17C 1/16

(54) **Réservoir pour fluide sous pression comprenant deux compartiments separes par un fond commun integrant une couche de protection thermique en mousse**
Tank für Flüssigkeit unter Druck, der zwei getrennte Kammern umfasst, die über einen gemeinsamen Boden mit einer Wärmedämmschutzschicht aus Schaumstoff verfügt
Container for fluid under pressure including two compartments separated by a shared bottom including a foam thermal protection layer

(30) Priorité: 31.01.2011 FR 1150722
(43) Date de publication de la demande: 01.08.2012
(73) Titulaire: Cryospace l'Air Liquide Aérospatiale, 78130 Les Mureaux (FR)
(72) Inventeur: Peyraud, François, 78440 GARGENVILLE (FR); Rambaud, Wladimir, 78820 JUZIERS (FR)
(74) Mandataire: Ilgart, Jean-Christophe

(56) Documents cités:
- EP-A1- 1 279 885
- EP-A2- 1 517 078
- FR-A1- 2 932 243
- US-A- 3 094 071
- US-A- 5 085 343

## Description

### DOMAINE TECHNIQUE

La présente invention se rapporte à un réservoir pour fluides sous pression comprenant deux compartiments séparés par un fond commun.

Plus spécifiquement, l'invention a trait au domaine des réservoirs dont les deux compartiments constitutifs sont destinés à contenir des fluides sous une pression pouvant atteindre quelques bars, par exemple au moins 5 bars, voire 20 bars ou plus, ce type de réservoir étant notamment utilisé pour stocker des ergols stockables et/ou cryogéniques.

L'invention trouve tout particulièrement une application dans le domaine des lanceurs et des fusées.

### ETAT DE LA TECHNIQUE ANTERIEURE

Les réservoirs d'ergols pour lanceurs ont déjà fait l'objet de plusieurs réalisations dans l'art antérieur, comme par exemple dans le document US 5,085,343.

En effet, on connaît les réservoirs classiques d'ergols cryogéniques constitués d'une paroi extérieure métallique définissant un espace sensiblement sphérique, à l'intérieur duquel de l'oxygène liquide ou de l'hydrogène liquide peuvent être introduits, sous une pression ne dépassant pas quelques bars.

Pour réaliser ce type de réservoir à ergols cryogéniques, on procède habituellement à l'assemblage, par exemple par soudage, de plusieurs secteurs métalliques les uns sur les autres, afin d'obtenir une paroi extérieure du réservoir de forme sensiblement sphérique. D'autres réservoirs présentent une paroi latérale cylindrique, et des fonds sphériques habituellement rapportés par soudage sur la virole cylindrique formant la paroi latérale.

De l'art antérieur, on connaît également les réservoirs à ergols stockables, tels que la monométhylhydrazine ou le péroxyde d'azote. Contrairement aux réservoirs à ergols cryogéniques dans lesquels la pression des liquides est faible en raison de la présence de turbopompes prévues à l'étage concerné du lanceur, les réservoirs à ergols stockables destinés à fonctionner sans turbopompes ont été conçus de manière à pouvoir supporter des pressions très supérieures, pouvant atteindre au moins 5 bars, voire 20 bars ou plus.

Pour répondre aux contraintes techniques telles que la forte pression à supporter et une masse maximale à ne pas dépasser pour ne pas trop alourdir la masse globale du lanceur, des réservoirs à paroi extérieure bobinée en matériau composite ont été développés. Il a en effet été constaté que l'emploi d'une telle technique permettait de réaliser des réservoirs relativement légers et très résistants aux fortes pressions, ces caractéristiques techniques avantageuses étant tout à fait conformes à celles recherchées.

Pour fabriquer ce type de réservoir bobiné, on réalise généralement un bobinage à l'aide de fils imprégnés autour d'un mandrin de bobinage, celui-ci présentant une forme sensiblement sphérique ou elliptique et complémentaire de celle de la paroi extérieure du réservoir que l'on souhaite effectuer. Une fois cette opération achevée, la paroi extérieure du réservoir est durcie par polymérisation, puis le mandrin de bobinage est démonté et extrait de l'espace intérieur sphérique formé par la paroi en matériau composite obtenue.

Par ailleurs, d'autres réalisations du type réservoir bi-compartiments ont également été proposées dans l'art antérieur.

De manière générale, ce type de réservoir comprend une paroi extérieure définissant un espace segmenté par un fond commun en deux compartiments, à l'intérieur desquels peuvent être respectivement stockés un combustible et un comburant, tels que l'hydrogène liquide et l'oxygène liquide.

Dans ce type de réalisation, le principal avantage réside dans la réduction de l'encombrement des éléments permettant de stocker les ergols destinés à alimenter la chambre de combustion d'un étage du lanceur, notamment par rapport aux solutions classiques de l'art antérieur, dans lesquelles les deux ergols étaient placés dans deux réservoirs distincts situés à distance l'un de l'autre. Par ailleurs, les réservoirs bi-compartiments disposent habituellement d'une cloison commune, dite « fond commun », dimensionné uniquement pour supporter la différence de pression entre les deux compartiments du réservoir. Ainsi, le fond commun prévu entre les deux compartiments n'est soumis qu'à une pression de l'ordre de quelques bars seulement, et adopte une conception relativement simple capable de supporter une telle différence de pression. De plus, lorsque la différence de températures entre les ergols le nécessite, une couche de protection thermique est interposée entre les deux compartiments, revêtue sur une surface extérieure du fond commun.

Néanmoins, cette solution répandue pose des inconvénients multiples, parmi lesquels celui de ne pas être entièrement satisfaisante pour ce qui concerne le rapport tenue mécanique / masse du fond commun et de sa couche de protection thermique associée. Il en résulte une pénalité pour le lanceur, en termes de charge utile.

Parmi les autres inconvénients, il est notamment cité le risque de dégradation des performances thermiques de la couche de protection thermique au contact des ergols, ainsi que son risque d'inflammation par ces ergols.

Enfin, lorsque le réservoir doit être conçu pour résister à des pressions inverses, signifiant que la différence de pression entre les deux compartiments s'inverse, le fond commun doit généralement être équipé de raidisseurs qui compliquent la fixation de la couche de protection thermique sur ce même fond commun.

### EXPOSÉ DE L'INVENTION

L'invention a donc pour but de proposer un réservoir pour fluides sous pression comprenant deux compartiments séparés par un fond commun, le réservoir remédiant au moins partiellement aux inconvénients mentionnés ci-dessus relatifs aux réalisations de l'art antérieur.

Pour ce faire, l'invention a pour objet un réservoir dans lequel ledit fond commun comprend une première et une seconde peaux métalliques délimitant respectivement lesdits premier et second compartiments, une couche de protection thermique en mousse étant interposée entre les deux peaux métalliques. De plus, ladite couche de protection thermique en mousse, de préférence en mousse rigide, est collée sur chacune des première et seconde peaux métalliques.

L'invention est donc remarquable en ce qu'elle prévoit d'intégrer la couche de protection thermique dans le fond commun, d'où il en résulte un rapport tenue mécanique / masse plus élevé que ceux rencontrés dans les réalisations de l'art antérieur. Cela s'explique notamment par le fait qu'en ayant ses deux faces opposées collées respectivement sur chacune des première et seconde peaux métalliques, il est formé un ensemble compact à trois éléments collés et superposés assimilable à une structure sandwich, présentant de bonnes performances de tenue en pression tout en disposant d'une faible masse. En particulier, l'épaisseur des peaux métalliques peut être réduite tout en disposant d'une tenue globale en pression satisfaisante.

La couche de protection thermique intercalaire remplit ainsi avantageusement une fonction thermomécanique.

Lorsque l'invention est destinée à équiper un lanceur, sa charge utile s'en trouve avantageusement augmentée.

De plus, parmi les autres avantages de l'invention, il est notamment cité l'absence de risque de dégradation des performances thermiques de la couche de protection thermique, qui est à présent confinée entre les deux peaux métalliques, donc plus en contact avec les ergols susceptibles d'être stockés dans les compartiments. Cet aspect de confinement de la couche de protection thermique engendre également une absence de risque d'inflammation.

Enfin, lorsque le réservoir doit être conçu pour résister à des pressions inverses en plus de résister aux pressions normales, la solution apportée par l'invention est tout à fait capable de remplir une telle fonction, sans généralement nécessiter de raidisseurs, et ce grâce à son rapport performant de tenue mécanique / masse. L'absence de raidisseurs confère un gain de coût important, notamment grâce à l'absence d'usinages tels que requis antérieurement pour faire apparaître ces raidisseurs. Néanmoins, lorsque de tels raidisseurs sont néanmoins requis, le fond commun peut aisément être équipé de ces raidisseurs sur la surface extérieure de l'une et/ou l'autre de ses peaux métalliques, sans que cela ne nuise à la facilité d'implantation de la couche de protection thermique entre ces deux mêmes couches métalliques.

De préférence, chacune desdites première et seconde peaux métalliques et couche de protection thermique en mousse prend la forme d'une calotte sphérique. Pour une parfaite complémentarité de forme, des usinages spécifiques sont prévus, en particulier sur la couche de protection thermique en mousse afin d'épouser très précisément les deux peaux.

De préférence, ladite première peau métallique présente une surface extérieure concave délimitant ledit premier compartiment du réservoir, et ladite seconde peau métallique présente une surface extérieure convexe délimitant ledit second compartiment du réservoir, lesdites surfaces extérieures concave et convexe étant lisses, dépourvues de raidisseurs. Alternativement, des raidisseurs peuvent être prévus sur l'une et/ou l'autre de ces deux surfaces extérieures.

De préférence, le réservoir bi-compartiment comporte une paroi extérieure en matériau composite délimitant les premier et second compartiments, ledit fond commun étant fixé à sa périphérie sur la surface intérieure de ladite paroi extérieure.

De préférence, la couche de protection thermique est réalisée en mousse PVC.

De préférence, la couche de protection thermique en mousse présente au moins l'une des caractéristiques techniques suivantes, et de préférence chacune d'elles :
- elle est à cellules fermées ;
- elle présente une masse volumique de l'ordre de 80 kg/m³ ;
- elle présente une conductivité thermique de l'ordre de 0,036 W/m.K à une température de 293 K.

De préférence, chacune des première et seconde peaux métalliques est réalisée en aluminium ou dans l'un de ses alliages.

De préférence, chacune des première et seconde peaux métalliques présente une épaisseur de l'ordre de 2 mm, et ladite couche de protection thermique en mousse présente une épaisseur de l'ordre de 20 mm.

Enfin, même si toute autre application reste possible pour la présente invention, les deux compartiments sont conçus pour contenir des ergols stockables et/ou cryogéniques.

L'invention a également pour objet un lanceur comprenant au moins un réservoir tel que décrit ci-dessus. Il s'agit de préférence du réservoir d'un étage supérieur de lanceur, par exemple du type Ariane 5.

D'autres avantages et caractéristiques de l'invention apparaîtront dans la description détaillée non limitative ci-dessous.

### BRÈVE DESCRIPTION DES DESSINS

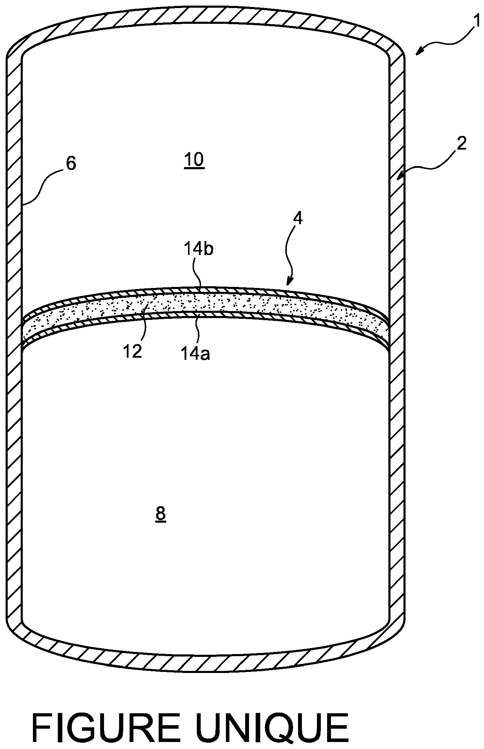

Cette description sera faite au regard de la figure unique représentant une vue schématique en coupe de face d'un réservoir selon un mode de réalisation préféré de la présente invention.

### EXPOSÉ DÉTAILLÉ DE MODES DE RÉALISATION PRÉFÉRÉS

La figure unique illustre un réservoir 1 pour fluides sous pression, selon un mode de réalisation préféré de la présente invention.

De préférence, les fluides sous pression utilisés sont des ergols stockables et/ou cryogéniques, destinés à alimenter une chambre de combustion d'un étage supérieur de lanceur (non représenté). Le réservoir 1 est conçu pour supporter des pressions de l'ordre d'au moins 5 bars, voire 20 bars ou plus, cette valeur correspondant sensiblement à une pression requise pour des ergols stockables alimentant une chambre de combustion, sans transiter par des turbopompes.

Le réservoir 1 comporte une paroi extérieure 2 en matériau composite, de forme sensiblement cylindrique, sphérique ou elliptique, et réalisée de préférence à l'aide de fils imprégnés bobinés de façon classique autour d'un mandrin de bobinage. Bien entendu, cette paroi extérieure 2 en matériau composite pourrait également être réalisée par bobinage par contact, ou encore par drapage, sans sortir du cadre de l'invention.

Un fond commun 4 est placé à l'intérieur de l'espace défini par la paroi extérieure 2. Il y est fixé de manière étanche à sa périphérie, sur la surface intérieure 6 de cette paroi 2. Globalement, le fond commun 4 présente une forme de calotte sphérique, éventuellement aplatie. Il sépare deux compartiments 8, 10 du réservoir, destinés à contenir les fluides sous pression. Par exemple, le premier compartiment 8 est dédié à la réception de l'oxygène liquide, tandis que le second compartiment 10 est dédié à la réception l'hydrogène liquide.

Afin d'offrir un rapport tenue mécanique / masse optimisé, le fond commun 4 intègre une couche de protection thermique en mousse 12. Cette couche est prévue pour faire face à la différence de température pouvant exister entre les deux fluides sous pression présents à l'intérieur des deux compartiments 8 et 10 du réservoir 1. Ainsi, dans le cas des ergols mentionnés ci-dessus, elle évite l'évaporation de l'hydrogène et le refroidissement de l'oxygène liquide, l'hydrogène étant en effet prévu pour être stocké à une température de 20 K, et l'oxygène à une température de 90 K.

Cette couche de protection thermique 12 est de préférence du type mousse rigide, par exemple une mousse PVC, à cellules fermées, également dite à porosité fermée. Elle s'étend sur une épaisseur sensiblement constante de l'ordre de 20 mm, en présentant une masse volumique de l'ordre de 80 kg/m³ et une conductivité thermique de l'ordre de 0,036 W/m.K, à une température de 293 K. Une telle mousse est par exemple commercialisée par la société Airex sous la dénomination C71-75.

A la manière d'une structure sandwich, la couche 12 est confinée entre une première peau métallique 14a et une seconde peau métalliques 14b, auxquelles elle est préférentiellement collée, sur de préférence la totalité de la superficie des interfaces. A cet égard, il est noté que les surfaces en contact sont de formes parfaitement complémentaires, et que les interfaces collées définies par ces surfaces complémentaires s'étendent donc sur toute la superficie de ces surfaces. Chaque peau 14a, 14b est réalisée en aluminium ou dans l'un de ses alliages, sur une épaisseur de l'ordre de 2 mm. La surface extérieure concave de la première peau 14a délimite donc une partie du premier compartiment 8, tandis qu'une surface intérieure de cette même peau 14a est au contact de la couche de protection thermique 12. De façon analogue, la surface extérieure concave de la seconde peau 14b délimite une partie du second compartiment 10, tandis qu'une surface intérieure de cette même peau 14b est au contact de la couche de protection thermique 12. De plus, la surface extérieure de cette peau 14b peut être équipée de raidisseurs (non représentés), permettant au fond commun 4 de résister aux pressions inversées, phénomène par lequel la différence de pression entre les compartiments s'inverse par rapport au sens habituel, entraînant ainsi une pression plus importante dans le second compartiment 10 que dans le premier compartiment 8 délimité par la surface extérieure concave de la peau 14a.

A cet égard, il est noté que la couche 12 ainsi que les peaux 14a et 14b sont prévues pour prendre chacune la forme d'une calotte sphérique, ces calottes étant empilées et collées par une colle classique, par exemple de l'araldite époxy, commercialisée par la société Huntsmann sous la dénomination AY103-1/HY953F. La couche de protection thermique 12 remplit ici l'intégralité de l'espace entre les peaux 14a, 14b.

En étant confinée entre les deux peaux 14a, 14b, cette couche de protection thermique 12 n'est avantageusement pas au contact des ergols, ce qui lui confère des performances thermiques non-dégradables, et empêche son inflammation. Par ailleurs, elle ne s'ajoute pas au fond commun du réservoir, mais en fait partie intégrante.

Bien entendu, diverses modifications peuvent être apportées par l'homme du métier au réservoir 1 qui vient d'être décrit, uniquement à titre d'exemples non limitatifs, tout en restant dans le cadre tel que défini par les revendications.

## Revendications

1. Réservoir (1) pour fluides sous pression comprenant un premier et un second compartiments (8, 10) séparés par un fond commun (4), lequel fond commun comprend une première et une seconde peaux métalliques (14a, 14b) délimitant respectivement lesdits premier et second compartiments, une couche de protection thermique en mousse (12) étant interposée entre les deux peaux métalliques (14a, 14b), **caractérisé en ce que** ladite couche de protection thermique en mousse (12) est collée sur chacune des première et seconde peaux métalliques (14a, 14b).

2. Réservoir selon la revendication 1, **caractérisé en ce que** ladite couche de protection thermique en mousse est réalisée à l'aide d'une mousse rigide.

3. Réservoir selon la revendication 1 ou la revendication 2, **caractérisé en ce que** chacune desdites première et seconde peaux métalliques (14a, 14b) et couche de protection thermique en mousse (12) prend la forme d'une calotte sphérique.

4. Réservoir selon l'une quelconque des revendications précédentes, **caractérisé en ce que** ladite première peau métallique (14a) présente une surface extérieure concave délimitant ledit premier compartiment (8) du réservoir, et **en ce que** ladite seconde peau métallique (14b) présente une surface extérieure convexe délimitant ledit second compartiment (10) du réservoir, lesdites surfaces extérieures concave et convexe étant lisses, dépourvues de raidisseurs.

5. Réservoir selon l'une quelconque des revendications précédentes, **caractérisé en ce qu'**il comporte une paroi extérieure (2) en matériau composite délimitant les premier et second compartiments (8, 10), ledit fond commun (4) étant fixé à sa périphérie sur la surface intérieure de ladite paroi extérieure (2).

6. Réservoir selon l'une quelconque des revendications précédentes, **caractérisé en ce que** la couche de protection thermique (12) est réalisée en mousse PVC.

7. Réservoir selon l'une quelconque des revendications précédentes, **caractérisé en ce que** la couche de protection thermique en mousse (12) présente au moins l'une des caractéristiques techniques suivantes :
- elle est à cellules fermées ;
- elle présente une masse volumique de l'ordre de 80 kg/m³ ;
- elle présente une conductivité thermique de l'ordre de 0,036 W/m.K à une température de 293 K.

8. Réservoir selon l'une quelconque des revendications précédentes, **caractérisé en ce que** chacune des première et seconde peaux métalliques (14a, 14b) est réalisée en aluminium ou dans l'un de ses alliages.

9. Réservoir selon l'une quelconque des revendications précédentes, **caractérisé en ce que** chacune des première et seconde peaux métalliques (14a, 14b) présente une épaisseur de l'ordre de 2 mm, et **en ce que** ladite couche de protection thermique en mousse (12) présente une épaisseur de l'ordre de 20 mm.

10. Réservoir selon l'une quelconque des revendications précédentes, **caractérisé en ce que** les deux compartiments (8,10) sont conçus pour contenir des ergols stockables et/ou cryogéniques.

11. Lanceur comprenant au moins un réservoir (1) selon l'une quelconque des revendications précédentes.

## Patentansprüche

1. Tank (1) für unter Druck stehende Fluids, enthaltend eine erste und eine zweite Kammer (8, 10), die durch einen gemeinsamen Boden (4) getrennt sind, wobei der gemeinsame Boden eine erste und eine zweite Metallhaut (14a, 14b) enthält, die jeweils die erste bzw. zweite Kammer begrenzen, wobei eine Wärmeschutzschicht aus Schaumstoff (12) zwischen den beiden Metallhäuten (14a, 14b) eingesetzt ist,
**dadurch gekennzeichnet, dass**
die Wärmeschutzschicht aus Schaumstoff (12) jeweils mit der ersten und der zweiten Metallhaut (14a, 14b) verklebt ist.

2. Tank nach Anspruch 1, **dadurch gekennzeichnet, dass** die Wärmeschutzschicht aus Schaumstoff mit Hilfe von Hartschaumstoff hergestellt ist.

3. Tank nach Anspruch 1 oder Anspruch 2, **dadurch gekennzeichnet, dass** jede aus erster und zweiter Metallhaut (14a, 14b) und Wärmeschutzschicht aus Schaumstoff (12) die Form einer sphärischen Kalotte hat.

4. Tank nach einem der vorangehenden Ansprüche, **dadurch gekennzeichnet, dass** die erste Metallhaut (14a) eine konkave Außenfläche aufweist, welche die erste Kammer (8) des Tanks begrenzt, und dass die zweite Metallhaut (14b) ein konvexe Außenfläche aufweist, welche die zweite Kammer (10) des Tanks begrenzt, wobei die konkave und die konvexe Außenfläche glatt und frei von Versteifungen sind.

5. Tank nach einem der vorangehenden Ansprüche, **dadurch gekennzeichnet, dass** er eine Außenwand (2) aus Verbundmaterial enthält, welche die erste und die zweite Kammer (8, 10) begrenzt, wobei der gemeinsame Boden (4) an seinem Umfang an die Innenfläche der Außenwand (2) befestigt ist.

6. Tank nach einem der vorangehenden Ansprüche, **dadurch gekennzeichnet, dass** die Wärmeschutzschicht (12) aus PVC-Schaumstoff hergestellt ist.

7. Tank nach einem der vorangehenden Ansprüche, **dadurch gekennzeichnet, dass** die Wärmeschutzschicht aus Schaumstoff (12) zumindest eines der nachfolgenden technischen Merkmale aufweist:
- sie ist geschlossenzellig ausgeführt;
- sie weist eine Massendichte in der Größenordnung von 80 kg/m³ auf;
- sie weist eine Wärmeleitfähigkeit in der Größenordnung von 0,036 W/m.K bei einer Temperatur von 293 K auf.

8. Tank nach einem der vorangehenden Ansprüche, **dadurch gekennzeichnet, dass** jede aus erster und zweiter Metallhaut (14a, 14b) aus Aluminium oder aus einem seiner Legierungen hergestellt ist.

9. Tank nach einem der vorangehenden Ansprüche, **dadurch gekennzeichnet, dass** jede aus erster und zweiter Metallhaut (14a, 14b) eine Dicke in der Größenordnung von 2 mm aufweist und dass die Wärmeschutzschicht aus Schaumstoff (12) eine Dicke in der Größenordnung von 20 mm aufweist.

10. Tank nach einem der vorangehenden Ansprüche, **dadurch gekennzeichnet, dass** die beiden Kammern (8, 10) dazu ausgelegt sind, lagerbare und/oder kryogene Raketentreibstoffe zu beinhalten.

11. Trägerrakete mit zumindest einem Tank (1) nach einem der vorangehenden Ansprüche.

## Claims

1. A container (1) for fluids under pressure including first and second compartments (8, 10) separated by a shared bottom (4), said shared bottom including first and second metal skins (14a, 14b) respectively delimiting said first and second compartments, a foam thermal protection layer (12) being inserted between the two metal skins (14a, 14b), **characterized in that** said foam thermal protection layer (12) is glued on each of the first and second metal skins (14a, 14b).

2. The container according to claim 1, **characterized in that** said foam thermal protection layer is made using a rigid foam.

3. The container according to claim 1 or claim 2, **characterized in that** each of said first and second metal skins (14a, 14b) and foam thermal protection layer (12) assumes the form of a spherical cap.

4. The container according to any one of the preceding claims, **characterized in that** said first metal skin (14a) has a concave outer surface delimiting said first compartment (8) of the container, and **in that** said second metal skin (14b) has a convex outer surface delimiting said second compartment (10) of the container, said concave and convex outer surfaces being smooth, free of stiffeners.

5. The container according to any one of the preceding claims, **characterized in that** it comprises an outer wall (2) made from a composite material delimiting the first and second compartments (8, 10), said shared bottom (4) being fastened at its periphery on the inner surface of said outer wall (2).

6. The container according to any one of the preceding claims, **characterized in that** the thermal protection layer (12) is made from PVC foam.

7. The container according to any one of the preceding claims, **characterized in that** the foam thermal protection layer (12) has at least one of the following technical features:
- it has closed cells;
- it has a density of about 80 kg/m³;
- it has a thermal conductivity of about 0.036 W/m.K at a temperature of 293 K.

8. The container according to any one of the preceding claims, **characterized in that** each of the first and second metal skins (14a, 14b) is made from aluminum or one of its alloys.

9. The container according to any one of the preceding claims, **characterized in that** each of the first and second metal skins (14a, 14b) has a thickness of about 2 mm, and **in that** said foam thermal protection layer (12) has a thickness of about 20 mm.

10. The container according to any one of the preceding claims, **characterized in that** both compartments (8, 10) are designed to contain storable and/or cryogenic propellants.

11. A launcher including at least one container (1) according to any one of the preceding claims.
